# EUROPEAN PATENT APPLICATION

(11) **EP 4 661 571 A1**
(43) Date of publication of application: **10.12.2025**
(21) Application number: 23919113.3
(22) Date of filing: 03.02.2023
(51) Int. Cl.: H04W 72/512

(54) **RADIO FRAME TRANSMISSION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/074458
(87) International publication number: WO 2024/159538

(57) **Abstract**

Embodiments of the present invention relate to the technical field of mobile communications, and provide a radio frame transmission method, an electronic device, and a storage medium. The radio frame transmission method is used for a sending end. The method comprises: sending a radio frame, wherein the radio frame comprises non-low-latency service data and low-latency service data; the low-latency service data is transmitted between two MSDUs of an A-MSDU of the non-low-latency service data; the life cycle parameter of the A-MSDU comprises a first parameter or a second parameter; the first parameter comprises a preset life cycle parameter of the non-low-latency service data; and the second parameter comprises a sum of the preset life cycle parameter and the transmission duration of the low-latency service data. The embodiments of the present invention provide a transmission mechanism that supports preemption resources, to achieve transmission of non-periodic low-latency services.

## Description

### TECHNICAL FIELD

Examples of the present invention relate to the field of mobile communication technologies. Particularly, the examples of the present invention relate to a wireless frame transmission method, an electronic device and a storage medium.

### BACKGROUND

Under ultra-high reliability (UHR), it is to further enhance a transmission mechanism for low-latency services. This may use a restricted target wake time (rTWT) mechanism to reserve resources for a device, which is the main way of reducing latency. The rTWT mechanism is designed for periodic low-latency services only; for transmitting bursty low-latency services, a resource preemption mechanism may be used. Therefore, a transmission mechanism that supports resource preemption is required to achieve transmissions of non-periodic low-latency services.

### SUMMARY

Examples of the present invention provide a wireless frame transmission method, an electronic device, and a storage medium to provide a transmission mechanism that supports resource preemption to achieve transmissions of non-periodic low-latency services.

In one aspect, the examples of the present invention provide a wireless frame transmission method, which is applied to a transmitter, and the method includes:
transmitting a wireless frame that includes non-low-latency service data and low-latency service data;
wherein the low-latency service data is transmitted between two media access control service data units (MSDUs) of an aggregation of MSDUs (A-MSDU) of the non-low-latency service data;
wherein a lifetime parameter of the A-MSDU includes: a first parameter or a second parameter;
wherein the first parameter includes a preset lifetime parameter of the non-low-latency service data; and
wherein the second parameter includes a sum of the preset lifetime parameter and a transmission duration of the low-latency service data.

In another aspect, the examples of the present invention further provide a wireless frame transmission method, which is applied to a receiver, and the method includes:
receiving a wireless frame transmitted by a transmitter that includes non-low-latency service data and low-latency service data;
wherein the low-latency service data is transmitted between two MSDUs of an A-MSDU of the non-low-latency service data;
wherein a lifetime parameter of the A-MSDU includes: a first parameter or a second parameter;
wherein the first parameter includes a preset lifetime parameter of the non-low-latency service data; and
wherein the second parameter includes a sum of the preset lifetime parameter and a transmission duration of the low-latency service data.

In another aspect, the examples of the present invention further provide an electronic device, being a transmitter, the electronic device including:
a transmitting module, configured to transmit a wireless frame that includes non-low-latency service data and low-latency service data;
wherein the low-latency service data is transmitted between two MSDUs of an A-MSDU of the non-low-latency service data;
wherein a lifetime parameter of the A-MSDU includes: a first parameter or a second parameter;
wherein the first parameter includes a preset lifetime parameter of the non-low-latency service data; and
wherein the second parameter includes a sum of the preset lifetime parameter and a transmission duration of the low-latency service data.

In another aspect, the examples of the present invention further provide an electronic device, being a receiver, the electronic device including:
a receiving module, configured to receive a wireless frame transmitted by a transmitter that includes non-low-latency service data and low-latency service data;
wherein the low-latency service data is transmitted between two MSDUs of an A-MSDU of the non-low-latency service data;
wherein a lifetime parameter of the A-MSDU includes: a first parameter or a second parameter;
wherein the first parameter includes a preset lifetime parameter of the non-low-latency service data; and
wherein the second parameter includes a sum of the preset lifetime parameter and a transmission duration of the low-latency service data.

The examples of the present invention further provide an electronic device, including one or more memories, one or more processors, and a computer program stored in the one or more memories and executable on the one or more processors. The one or more processors, when executing the program, implement one or more of the methods according to the examples of the present invention.

The examples of the present invention further provide a computer-readable storage medium, on which a computer program is stored. The computer program, when executed by one or more processors, implements one or more of the methods according to the examples of the present invention.

In the examples of the present invention, when a transmitter transmits a low-latency service by preempting transmission resources, a lifetime parameter of a non-low-latency service includes a first parameter or a second parameter, the first parameter includes a preset lifetime parameter of the non-low-latency service data, and the second parameter includes a sum of the preset lifetime parameter and a transmission duration of the low-latency service data. The examples of the present invention provide a scheme of determining the lifetime parameter of the non-low-latency service to support a resource preemption transmission mechanism, thereby achieving transmissions of non-periodic low-latency services.

For the additional aspects and advantages of the examples of the present invention, a part of them will be set forth in the following description, which will be apparent according to the following description or be learned through putting the present invention into practice.

### BRIEF DESCRIPTION OF THE DRAWINGS

The drawings used in the description of the examples of the present invention are briefly introduced below to explain the technical solutions provided in examples of the present invention more clearly. It is evident that the drawings in the following description illustrate only some examples of the present invention, and based on these drawings, those of ordinary skill in the art may obtain other drawings without creative work.
FIG. 1 is a first flowchart of a wireless frame transmission method provided in an example of the present invention.
FIG. 2 is a first schematic diagram of a first illustration according to an example of the present invention.
FIG. 3 is a second schematic diagram of a first illustration according to an example of the present invention.
FIG. 4 is a third schematic diagram of a first illustration according to an example of the present invention.
FIG. 5 is a schematic diagram of a second illustration according to an example of the present invention.
FIG. 6 is the second flowchart of a wireless frame transmission method provided in an example of the present invention.
FIG. 7 is the first schematic structural diagram of an electronic device provided in an example of the present invention.
FIG. 8 is the second schematic structural diagram of an electronic device provided in an example of the present invention.
FIG. 9 is the third schematic structural diagram of an electronic device provided in an example of the present invention.

### DETAILED DESCRIPTION OF THE EMBODIMENTS

Examples will be described in detail herein, with illustrations shown in the accompanying drawings. Where the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the examples of the present invention are for the purpose of describing particular examples only, and are not intended to limit the present invention. Terms determined by "a," "said," and "the" in their singular forms in the present invention and the appended claims are also intended to include their plural forms, unless clearly indicated otherwise in the context. It is also understood that the term "and/or" as used herein is and includes any and all possible combinations of one or more of the associated listed items. For example, A and/or B means that A exists alone, A and B exist at the same time, and B exists alone. The character "/" generally indicates that the associated objects before and after are in an "or" relationship. The term "plurality" refers to two or more than two. In view of this, in the examples of the present invention, "plurality" may also be understood as "at least two".

It is to be understood that, although terms "first," "second," "third," and the like may be used in the present invention to describe various information, such information should not be limited to these terms. These terms are only used to distinguish the information of the same type from each other. For example, without departing from the scope of the present invention, first information may be referred to as second information. Similarly, second information may also be referred to as first information. Depending on the context, the word "if" as used herein may be interpreted as "when," "upon," or "in response to determining."

The following, in conjunction with the drawings of the examples of the present invention, will clearly and completely describe the technical solutions provided in the examples of the present invention. It is evident that the described examples are a part, but not all, of the examples of the present invention. Based on the examples provided in the present invention, all other examples, which can be obtained by those of ordinary skill in the art without creative work, shall fall within the protection scope of the present invention.

The examples of the present invention provide a wireless frame transmission method, an electronic device, and a storage medium to provide a transmission mechanism that supports resource preemption to achieve transmissions of non-periodic low-latency services.

The methods and the apparatuses are based on the same disclosed concept. For the methods and the apparatuses, their implementations may refer to each other since their principles of solving problems are similar, and their repeated parts are not repeated.

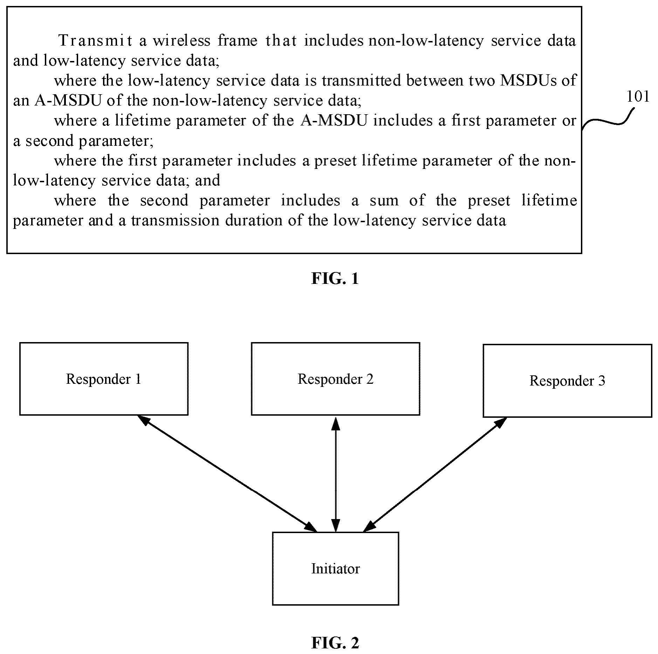

As illustrated in FIG. 1, the examples of the present invention provide a wireless frame transmission method. Optionally, the method may be applied to a transmitter. The transmitter may be a station (STA) or an access point (AP). For convenience of explanation, the following uses examples of the transmitter being the STA. However, this does not limit the examples of the present invention.

The method may include the following steps.

At step 101, a wireless frame that includes non-low-latency service data and low-latency service data is transmitted.

Specifically, the low-latency service data is transmitted between two media access control service data units (MSDUs) of an aggregation of MSDUs (A-MSDU) of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

Optionally, in the examples of the present invention, the AP, which is a device with a wireless-to-wired bridging function for example, is responsible for extending services provided by a wired network to a wireless network. The STA, which is an electronic device with a wireless network access function for example, provides a frame delivery service to enable information to be transmitted.

In a wireless local access network (WLAN), a basic service set (BSS) may be composed of an AP and one or more STAs communicating with the AP. One BSS may be connected to a distribution system (DS) through its AP, and then connected to another BSS to form an extended service set (ESS). As a first illustration and referring to FIG. 2, AP1 and STA1 constitute BSS1, and AP2 and STA2 constitute BSS2. An overlapping basic service set (OBSS) is formed when the coverages of two or more BSSs overlap. As illustrated in FIG. 2, BSS1 and BSS2 overlap to form the OBSS.

Optionally, in the examples of the present invention, the AP and the STA may be devices supporting multiple connections, for example, may be represented as an AP multi-link device (MLD) and a non-AP MLD, respectively. The AP MLD may represent the AP supporting multiple connection communication functions, and the non-AP MLD may represent the STA supporting multiple connection communication functions.

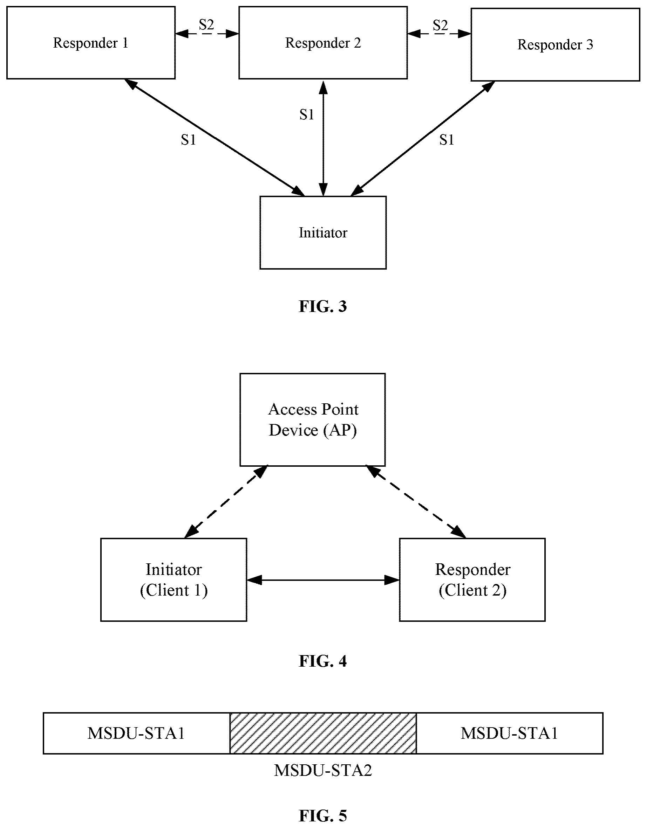

Referring to FIG. 3, the AP MLD may include three affiliated APs, such as AP1, AP2 and AP3 as illustrated in FIG. 3, where each AP may work in Connection 1, Connection 2 and Connection 3, respectively. The non-AP MLD may also include three affiliated STAs, such as STA1, STA2 and STA3 as illustrated in FIG. 2, where STA1 works in Connection 1, STA2 works in Connection 2 and STA3 works in Connection 3.

For ease of description, the following mainly describes examples in which one AP communicates with one STA in multiple connections. However, the examples of the present invention are not limited thereto. In the example of FIG. 3, it is assumed that AP1 communicates with STA1 via a corresponding a first connection Link 1. Similarly, AP2 communicates with STA2 via a corresponding a second connection Link 2, and AP communicates with STA3 via a third connection Link 3. In addition, Link 1 to Link 3 may be multiple connections at different frequencies, for example, at 2.4 GHz, 5 GHz, and 6 GHz, or be several connections at 2.4 GHz with the same or different bandwidths. Furthermore, a plurality of channels may exist in each connection. It may be understood that the communication scenario illustrated in FIG. 2 is merely illustrative and the conception of the present invention is not limited thereto. For example, the AP MLD may be connected to multiple (e.g., three) non-AP MLDs, or in each connection, the AP may communicate with multiple STAs of other types.

Under ultra-high reliability (UHR), a resource preemption mechanism may be used for transmitting bursty low-latency services. The transmitter transmits the wireless frame. The wireless frame includes the non-low-latency service data and the low-latency service data. The low-latency service data is transmitted between the two MSDUs of the A-MSDU of the non-low-latency service data; that is, a low-latency service is transmitted between the two MSDUs of the same A-MSDU by preempting transmission resources, so as to ensure the transmission efficiency of the low-latency service. Specifically, the two MSDUs of the same A-MSDU may be two adjacent MSDUs or the same MSDU. For example, during transmitting MSDU1, its transmission resources are preempted to transmit the low-latency service, and MSDU1 is retransmitted after the transmission of the low-latency service is completed. In this case, upon transmitting the low-latency service, a counting of a transmit timer for the non-low-latency service is suspended, and the duration of the lifetime parameter of the non-low-latency service is required to add the transmission duration of the low-latency service, or add the transmission duration of the non-low-latency service and the retransmission duration.

Specifically, the MSDU is a service data unit in a media access control layer.

For example, as a second example and referring to FIG. 5, MSDU-STA1 represents an MSDU transmitted to Receiver 1 (STA1), and MSDU-STA2 represents an MSDU transmitted to Receiver 2 (STA2).

The transmitter transmits an A-MSDU. During the transmission of the MSDU-STA1 of a non-low-latency service, if there is a low-latency service to be transmitted, the transmitter preempts the resources for the A-MSDU of the non-low-latency service for transmission, that is, for transmitting the MSDU-STA2. After the data transmission of the low-latency service is completed, the MSDU-STA1 of the non-low-latency service is transmitted.

Thus, the lifetime parameter of the A-MSDU includes the first parameter or the second parameter.

The first parameter includes the preset lifetime parameter of the non-low-latency service data, which means that the lifetime parameter of the A-MSDU is a fixed value. For example, a fixed lifetime duration is set for the A-MSDU of the non-low-latency service data. Thus, even if the data transmission resources for transmitting the non-low-latency service are preempted to transmit the low-latency service, the preset lifetime parameter of the non-low-latency service data is still the fixed lifetime duration. In addition, the transmitter preempts a transmission opportunity (TXOP) belonging to the current moment and originally used for transmitting the non-low-latency service. When the low-latency service is transmitted in this preempted TXOP, the lifetime of the MSDUs (or the A-MSDU) of the non-low-latency service data is fixed, and the transmit timer for the non-low-latency service data stops its counting.

The second parameter includes the sum of the preset lifetime parameter and the transmission duration of the low-latency service data. That is, the lifetime parameter of the A-MSDU is the preset lifetime duration added with the transmission duration of the low-latency service data. In this case, during transmitting the low-latency service data, the transmit timer for the non-low-latency service data is still counted, and both the receiver and the transmitter learn that the lifetime of the non-low-latency service data has been added with the transmission duration of the low-latency service (or with the sum of the transmission duration of the low-latency service and the retransmission duration).

In the one or more examples of the present invention, when the transmitter transmits the low-latency service by preempting the transmission resources, the lifetime parameter of the non-low-latency service includes the first parameter or the second parameter, the first parameter includes the preset lifetime parameter of the non-low-latency service data, and the second parameter includes the sum of the preset lifetime parameter and the transmission duration of the low-latency service data. The one or more examples of the present invention provide the scheme of determining the lifetime parameter of the non-low-latency service to support the resource preemption transmission mechanism, thereby achieving transmissions of non-periodic low-latency services.

The examples of the present invention provide a wireless frame transmission method. Optionally, the method may be applied to a transmitter. The method may include the following steps:
transmitting a first MSDU of an A-MSDU of non-low-latency service data;
transmitting low-latency service data, and determining a remaining lifetime duration of a lifetime parameter of the A-MSDU.

Specifically, the lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

It may be understood that the first MSDU is the non-low-latency service data transmitted before the low-latency service. After the transmission of the low-latency service data is completed, the first MSDU may be retransmitted.

After transmitting the low-latency service data, the transmitter may determine the remaining lifetime duration of the lifetime parameter of the A-MSDU. The remaining lifetime duration may be determined based on the lifetime parameter of the entire A-MSDU. For example, when the lifetime parameter of the entire A-MSDU is the first parameter that is a fixed value, it may be determined based on a remaining duration of a duration corresponding to the first parameter at the current moment. For example, if the first parameter is 1 millisecond (ms), and 0.8ms of the 1ms has passed after the transmission of the low-latency service data is completed, the remaining lifetime duration is 0.2ms.

For example, when the lifetime parameter of the entire A-MSDU is the second parameter, the second parameter is required to take into account the transmission duration of the low-latency service data. For example, if the preset lifetime parameter of the A-MSDU is 1ms, 0.8ms of the 1ms has passed after the transmission of the low-latency service data is completed, and the transmission duration of the low-latency service data is 0.1ms, the remaining lifetime duration is 0.2ms+0.1ms, i.e., 0.3ms.

The examples of the present invention provide a wireless frame transmission method. Optionally, the method may be applied to a transmitter. The method may include the following steps:
transmitting a first MSDU of an A-MSDU of non-low-latency service data;
transmitting low-latency service data, retransmitting the first MSDU, and determining a remaining lifetime duration of a lifetime parameter of the A-MSDU.

Specifically, the lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

The first MSDU is the non-low-latency service data transmitted before the low-latency service. After the transmission of the low-latency service data is completed, the first MSDU may be retransmitted to avoid incomplete transmission of the first MSDU.

The examples of the present invention provide a wireless frame transmission method. Optionally, the method may be applied to a transmitter. The method may include the following steps:
transmitting a first MSDU of an A-MSDU of non-low-latency service data;
transmitting low-latency service data, retransmitting the first MSDU, and determining a remaining lifetime duration of a lifetime parameter of the A-MSDU.

Specifically, the lifetime parameter of the A-MSDU includes a first parameter or a second parameter.

The first parameter includes a preset lifetime parameter of the non-low-latency service data.

The second parameter includes a sum of the preset lifetime parameter, a transmission duration of the low-latency service data, and a retransmission duration for retransmitting the first MSDU.

Specifically, the first MSDU is the non-low-latency service data transmitted before the low-latency service. After the transmission of the low-latency service data is completed, the first MSDU may be retransmitted to avoid incomplete transmission of the first MSDU. In the case of retransmitting the first MSDU, the lifetime parameter of the A-MSDU may be added with the retransmission duration consumed by retransmitting the first MSDU. Correspondingly, the remaining lifetime duration is also added with the retransmission duration. For example, the preset lifetime parameter of the A-MSDU is 1ms. If 0.8ms of the 1ms has passed after the transmission of the low-latency service data is completed, the transmission duration of the low-latency service data is 0.1ms, and the retransmission of the first MSDU takes 0.1ms, the remaining lifetime duration is 0.2ms+0.1ms+0.1ms, i.e., 0.4ms.

Optionally, in one or more examples of the present invention, during transmitting the low-latency service data, the transmitter suspends a counting of a transmit timer for the non-low-latency service data. For the transmit timer for the remaining non-low-latency service whose resources are preempted, its counting is suspended upon the low-latency service is transmitted, and its counting starts upon the non-low-latency service is retransmitted, thereby ensuring that the transmit timer is consistent with the actual transmission situation of the non-low-latency service.

One or more examples of the present invention provide a wireless frame transmission method, which is applied to a transmitter, and the method includes:
transmitting a wireless frame that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

In an optional example, transmitting the wireless frame includes:
transmitting a first MSDU of the A-MSDU;
transmitting the low-latency service data, and determining a remaining lifetime duration of the lifetime parameter.

In an optional example, after transmitting the low-latency service data, the method further includes:
retransmitting the first MSDU.

In an optional example, the second parameter includes a sum of the preset lifetime parameter, the transmission duration of the low-latency service data, and a retransmission duration for retransmitting the first MSDU.

In an optional example, transmitting the low-latency service data includes:
suspending a counting of a transmit timer for the non-low-latency service data.

In the one or more examples of the present invention, when the transmitter transmits the low-latency service by preempting the transmission resources, the lifetime parameter of the non-low-latency service includes the first parameter or the second parameter, the first parameter includes the preset lifetime parameter of the non-low-latency service data, and the second parameter includes the sum of the preset lifetime parameter and the transmission duration of the low-latency service data. The one or more examples of the present invention provide the scheme of determining the lifetime parameter of the non-low-latency service to support the resource preemption transmission mechanism, thereby achieving transmissions of non-periodic low-latency services.

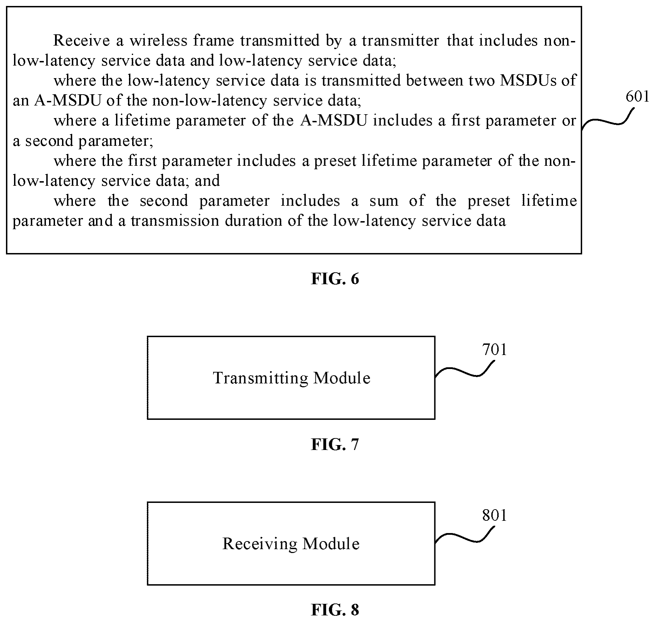

Referring to FIG. 6, the examples of the present invention provide a wireless frame transmission method. Optionally, the method may be applied to a receiver. The receiver may be an STA or an AP. For convenience of explanation, the following uses examples of the receiver being the STA. However, this does not limit the examples of the present invention.

The method may include the following steps.

At step 601, a wireless frame transmitted by a transmitter that includes non-low-latency service data and low-latency service data is received.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

Specifically, the architecture of a WLAN to which the wireless frame transmission method provided in the one or more examples of the present invention is applied refers to the aforementioned first illustration, which is not repeated here.

Under UHR, the transmitter may transmit bursty low-latency services by using a resource preemption mechanism. The receiver the wireless frame. The wireless frame includes the non-low-latency service data and the low-latency service data. The low-latency service data is transmitted between the two MSDUs of the A-MSDU of the non-low-latency service data; that is, the transmitter transmits a low-latency service between the two MSDUs of the same A-MSDU by preempting transmission resources, so as to ensure the transmission efficiency of the low-latency service. Specifically, the two MSDUs of the same A-MSDU may be two adjacent MSDUs or the same MSDU. For example, during transmitting MSDU1, its transmission resources are preempted to transmit the low-latency service, and MSDU1 is retransmitted after the transmission of the low-latency service is completed. In this case, upon transmitting the low-latency service, a counting of a transmit timer for the non-low-latency service is suspended, and the duration of the lifetime parameter of the non-low-latency service is required to add the transmission duration of the low-latency service, or add the transmission duration of the non-low-latency service and the retransmission duration.

For example, as a second example and referring to FIG. 5, MSDU-STA1 represents an MSDU transmitted to Receiver 1 (STA1), and MSDU-STA2 represents an MSDU transmitted to Receiver 2 (STA2).

The transmitter transmits an A-MSDU. During the transmission of the MSDU-STA1 of a non-low-latency service, if there is a low-latency service to be transmitted, the transmitter preempts the resources for the A-MSDU of the non-low-latency service for transmission, that is, for transmitting the MSDU-STA2. After the data transmission of the low-latency service is completed, the MSDU-STA1 of the non-low-latency service is transmitted.

Thus, in the process that the receiver receives the non-low-latency service data, the lifetime parameter of the A-MSDU of the non-low-latency service data includes the first parameter or the second parameter.

The first parameter includes the preset lifetime parameter of the non-low-latency service data, which means that the lifetime parameter of the A-MSDU is a fixed value. For example, a fixed lifetime duration is set for the A-MSDU of the non-low-latency service data. Thus, even if the data transmission resources for transmitting the non-low-latency service are preempted to transmit the low-latency service, the preset lifetime parameter of the non-low-latency service data is still the fixed lifetime duration. In addition, the transmitter preempts a TXOP belonging to the current moment and originally used for transmitting the non-low-latency service. When the low-latency service is transmitted in this preempted TXOP, the lifetime of the MSDUs (or the A-MSDU) of the non-low-latency service data is fixed, and the transmit timer for the non-low-latency service data stops its counting.

The second parameter includes the sum of the preset lifetime parameter and the transmission duration of the low-latency service data. That is, the lifetime parameter of the A-MSDU is the preset lifetime duration added with the transmission duration of the low-latency service data. In this case, during transmitting the low-latency service data, the transmit timer for the non-low-latency service data is still counted, and both the receiver and the transmitter learn that the lifetime of the non-low-latency service data has been added with the transmission duration of the low-latency service (or with the sum of the transmission duration of the low-latency service and the retransmission duration).

In the one or more examples of the present invention, if the transmitter transmits the low-latency service by preempting the transmission resources, in the process that the receiver receives the non-low-latency service, the lifetime parameter of the non-low-latency service includes the first parameter or the second parameter, the first parameter includes the preset lifetime parameter of the non-low-latency service data, and the second parameter includes the sum of the preset lifetime parameter and the transmission duration of the low-latency service data. The one or more examples of the present invention provide the scheme of determining the lifetime parameter of the non-low-latency service to support the resource preemption transmission mechanism, thereby achieving transmissions of non-periodic low-latency services.

The examples of the present invention provide a wireless frame transmission method. Optionally, the method may be applied to a receiver. The method may include the following steps:
receiving a first MSDU of an A-MSDU of non-low-latency service data transmitted by a transmitter;
receiving low-latency service data transmitted by the transmitter, and determining a remaining lifetime duration of a lifetime parameter.

Specifically, the lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

It may be understood that the first MSDU is the non-low-latency service data transmitted before the low-latency service. After the transmission of the low-latency service data is completed, the first MSDU may be retransmitted.

After the transmitter transmits the low-latency service data, the receiver may determine the remaining lifetime duration of the lifetime parameter of the A-MSDU. The remaining lifetime duration may be determined based on the lifetime parameter of the entire A-MSDU. For example, when the lifetime parameter of the entire A-MSDU is the first parameter that is a fixed value, the receiver may determine it based on a remaining duration of a duration corresponding to the first parameter at the current moment. For example, if the first parameter is 1ms, and 0.8ms of the 1ms has passed after the transmission of the low-latency service data is completed, the remaining lifetime duration is 0.2ms.

For example, when the lifetime parameter of the entire A-MSDU is the second parameter, the second parameter is required to take into account the transmission duration of the low-latency service data. For example, if the preset lifetime parameter of the A-MSDU is 1ms, 0.8ms of the 1ms has passed after the transmitter completes the transmission of the low-latency service data, and the transmission duration of the low-latency service data is 0.1ms, the remaining lifetime duration is 0.2ms+0.1ms, i.e., 0.3ms.

The examples of the present invention provide a wireless frame transmission method. Optionally, the method may be applied to a receiver. The method may include the following steps:
receiving a first MSDU of an A-MSDU of non-low-latency service data transmitted by a transmitter;
receiving low-latency service data transmitted by the transmitter, receiving the first MSDU retransmitted by the transmitter, and determining a remaining lifetime duration of a lifetime parameter.

Specifically, the lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

The first MSDU is the non-low-latency service data transmitted before the low-latency service. After the transmission of the low-latency service data is completed, the transmitter may retransmit the first MSDU, and the receiver receives the first MSDU retransmitted by the transmitter to avoid incomplete transmission of the first MSDU.

The examples of the present invention provide a wireless frame transmission method. Optionally, the method may be applied to a receiver. The method may include the following steps:
receiving a first MSDU of an A-MSDU of non-low-latency service data transmitted by a transmitter;
receiving low-latency service data transmitted by the transmitter, receiving the first MSDU retransmitted by the transmitter, and determining a remaining lifetime duration of a lifetime parameter.

Specifically, the lifetime parameter of the A-MSDU includes a first parameter or a second parameter.

The first parameter includes a preset lifetime parameter of the non-low-latency service data.

The second parameter includes a sum of the preset lifetime parameter, a transmission duration of the low-latency service data, and a retransmission duration for retransmitting the first MSDU.

Specifically, the first MSDU is the non-low-latency service data transmitted before the low-latency service. After the transmission of the low-latency service data is completed, the transmitter may retransmit the first MSDU to avoid incomplete transmission of the first MSDU. In the case of retransmitting the first MSDU, the lifetime parameter of the A-MSDU may be added with the retransmission duration consumed by retransmitting the first MSDU. Correspondingly, the remaining lifetime duration is also added with the retransmission duration. For example, the preset lifetime parameter of the A-MSDU is 1ms. If 0.8ms of the 1ms has passed after the transmitter completes the transmission of the low-latency service data, the transmission duration of the low-latency service data is 0.1ms, and the retransmission of the first MSDU takes 0.1ms, the remaining lifetime duration is 0.2ms+0.1ms+0.1ms, i.e., 0.4ms.

Optionally, in one or more examples of the present invention, receiving the low-latency service data transmitted by the transmitter includes:
suspending a counting of a transmit timer for the non-low-latency service data.

For the transmit timer for the remaining non-low-latency service whose resources are preempted is suspended, the receiver controls the transmit timer, so as to suspend its counting upon the low-latency service is transmitted, and start its counting upon the non-low-latency service is retransmitted, thereby ensuring that the transmit timer is consistent with the actual transmission situation of the non-low-latency service.

One or more examples of the present invention provide a wireless frame transmission method, which is applied to a receiver, and the method includes:
receiving a wireless frame transmitted by a transmitter that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

In an optional example, receiving the wireless frame transmitted by the transmitter includes:
receiving a first MSDU of the A-MSDU transmitted by the transmitter;
receiving the low-latency service data transmitted by the transmitter, and determining a remaining lifetime duration of the lifetime parameter.

In an optional example, after receiving the low-latency service data transmitted by the transmitter, the method further includes:
receiving the first MSDU retransmitted by the transmitter.

In an optional example, the second parameter includes a sum of the preset lifetime parameter, the transmission duration of the low-latency service data, and a retransmission duration for retransmitting the first MSDU.

In an optional example, receiving the low-latency service data transmitted by the transmitter includes:
suspending a counting of a transmit timer for the non-low-latency service data.

In the one or more examples of the present invention, if the transmitter transmits the low-latency service by preempting the transmission resources, in the process that the receiver receives the non-low-latency service, the lifetime parameter of the non-low-latency service includes the first parameter or the second parameter, the first parameter includes the preset lifetime parameter of the non-low-latency service data, and the second parameter includes the sum of the preset lifetime parameter and the transmission duration of the low-latency service data.

Referring to FIG. 7, based on the same principle as the methods provided in the examples of the present invention, the examples of the present invention further provide an electronic device. The electronic device is a transmitter. The electronic device includes:
a transmitting module 701 that is configured to transmit a wireless frame that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

In an optional example, the transmitting module 701 is configured to:
transmit a first MSDU of the A-MSDU;
transmit the low-latency service data, and determine a remaining lifetime duration of the lifetime parameter.

In an optional example, the electronic device further includes:
a retransmitting module that is configured to retransmit the first MSDU after the transmitting module 701 transmits the low-latency service data.

In an optional example, the second parameter includes: a sum of the preset lifetime parameter, the transmission duration of the low-latency service data, and a retransmission duration for retransmitting the first MSDU.

In an optional example, the transmitting module 701 is configured to:
suspend a counting of a transmit timer for the non-low-latency service data.

The examples of the present invention also provide a wireless frame transmission apparatus, which is applied to a transmitter, and the apparatus includes:
a wireless frame transmitting module that is configured to transmit a wireless frame that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

The apparatus also includes other modules of the electronic device in the foregoing example, which will not be repeated here.

Referring to FIG. 8, based on the same principle as the methods provided in the examples of the present invention, the examples of the present invention further provide an electronic device. The electronic device is a receiver. The electronic device includes:
a receiving module 801 that is configured to receive a wireless frame transmitted by a transmitter that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

In an optional example, the receiving module 801 is configured to:
receive a first MSDU of the A-MSDU transmitted by the transmitter;
receive the low-latency service data transmitted by the transmitter, and determine a remaining lifetime duration of the lifetime parameter.

In an optional example, the electronic device further includes:
an MSDU receiving module that is configured to receive the first MSDU retransmitted by the transmitter after the receiving module 801 receives the low-latency service data transmitted by the transmitter.

In an optional example, the second parameter includes: a sum of the preset lifetime parameter, the transmission duration of the low-latency service data, and a retransmission duration for retransmitting the first MSDU.

In an optional example, the receiving module 801 is configured to suspend a counting of a transmit timer of the non-low-latency service data.

The examples of the present invention also provide a wireless frame transmission apparatus, which is applied to a transmitter, and the apparatus includes:
a receiving module that is configured to receive a wireless frame transmitted by a transmitter that includes non-low-latency service data and low-latency service data.

Specifically, the low-latency service data is transmitted between two MSDUs of an A-MSDU of the non-low-latency service data.

A lifetime parameter of the A-MSDU includes a first parameter or a second parameter.

The first parameter includes a preset lifetime parameter of the non-low-latency service data.

The second parameter includes a sum of the preset lifetime parameter and a transmission duration of the low-latency service data.

The apparatus also includes other modules of the electronic device in the foregoing example, which is not repeated here.

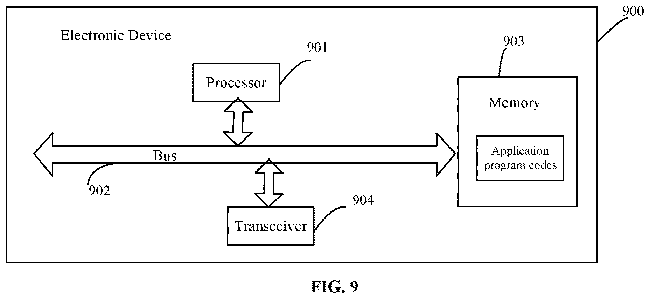

In an optional example, the examples of the present invention further provide an electronic device. As illustrated in FIG. 9, the electronic device 900 illustrated in FIG. 9 may be a server, including a processor 901 and a memory 903. The processor 901 and the memory 903 are connected, for example, via a bus 902. Optionally, the electronic device 900 may further include a transceiver 904. It is to be noted that in actual applications, the number of transceivers 904 is not limited to one, and the structure of the electronic device 900 does not constitute a limitation on the examples of the present invention.

The processor 901 may be a central processing unit (CPU), a general-purpose processor, a digital signal processor (DSP), an application specific integrated circuit (ASIC), a field programmable gate array (FPGA) or another programmable logic device, a transistor logic device, a hardware component or any combination thereof. The processor may implement or execute various illustrative logical blocks, modules, and circuits described in conjunction with the disclosed contents of the present invention. The processor 901 may also be a combination for implementing computing functions, such as a combination of one or more microprocessors, and a combination of a DSP and a microprocessor.

The bus 902 may include a channel for transmitting information between the above components. The bus 902 may be a peripheral component interconnect (PCI) bus or an extended industry standard architecture (EISA) bus, etc. The bus 902 may be divided into an address bus, a data bus, a control bus, and so on. For ease of representation, only a thick line is illustrated in FIG. 9, but it does not mean that there is only one bus or one type of bus.

The memory 903 may be a read-only memory (ROM) or other types of static storage devices that can store static information and instructions, a random access memory (RAM) or other types of dynamic storage devices that can store information and instructions, or an electrically erasable programmable read-only memory (EEPROM), a compact disc read-only memory (CD-ROM) or other optical disk storage, an optical disc storage (including a compressed optical disc, a laser disc, an optical disc, a digital versatile disc, a Blu-ray disc, etc.), a magnetic disk storage medium or other magnetic storage devices, or any other medium that can be configured to carry or store the desired program codes in the form of instructions or data structures and can be accessed by a computer, but is not limited to these.

The memory 903 is configured to store application program codes for executing the examples of the present invention, and the execution is controlled by the processor 901. The processor 901 is configured to execute the application program codes stored in the memory 903 to implement the contents illustrated in the foregoing method examples.

The electronic device includes, but is not limited to, a mobile terminal such as a mobile phone, a laptop, a digital broadcast receiver, a personal digital assistant (PDA), a pad, a portable multimedia player (PMP) and a vehicle-mounted terminal (e.g., a vehicle-mounted navigation terminal) or a fixed terminal such as a digital TV and a desktop computer. The electronic device illustrated in FIG. 9 is merely an example and should not limit the functions and the usage scope of the examples of the present invention.

The server provided in the present invention may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks (CDNs), big data and artificial intelligence platforms. The terminal may be a smart phone, a pad, a laptop computer, a desktop computer, a smart speaker, a smart watch, etc., but is not limited thereto. The terminal and the server may be connected directly or indirectly via wired or wireless communication, which is not limited in the present invention.

The examples of the present invention provide a computer-readable storage medium, on which a computer program is stored. The computer program, when running on a computer, enables the computer to perform the corresponding contents of the foregoing method examples.

Although the steps in the flowcharts of the accompanying drawings are displayed sequentially as indicated by the arrows, it is to be understood that these steps are not necessarily performed sequentially in the order indicated by the arrows. Unless otherwise specified herein, there is no strict order limitation for performing these steps, and these steps may be performed in other orders. In addition, at least part of the steps in the flowcharts of the accompanying drawings may include multiple sub-steps or multiple phases. These sub-steps or phases are not necessarily performed at the same time, but may be performed at different moments. The order of these sub-steps or phases is not necessarily sequential, but may rotate or alternate with at least part of another step, sub-steps, or phases thereof.

It is to be noted that the computer-readable medium in the present invention may be a computer-readable signal medium, a computer-readable storage medium, or any combination of the two. The computer readable storage medium may be, for example but not limited to, an electronic, magnetic, optical, electromagnetic, infrared, or semiconductor system, apparatus, or component, or any combination thereof. More specific examples of the computer-readable storage medium may include, but are not limited to, an electrical connection having one or more conductors, a portable computer disk, a hard disk, an RAM, an ROM, an EPROM or a flash memory, an optical fiber, a portable CD-ROM, an optical storage device, a magnetic storage device, or any suitable combination thereof. In the present invention, the computer-readable storage medium may be any tangible medium that contains or stores a program that may be used by or in connection with an instruction execution system, apparatus, or device. In the present invention, a computer-readable signal medium may include data signals propagated in a baseband or as a part of a carrier wave, in which computer-readable program codes are carried. The propagated data signals may take a variety of forms, including but not limited to electromagnetic signals, optical signals, or any suitable combination thereof. The computer-readable signal medium may also be any computer-readable medium other than the computer-readable storage medium. The computer-readable signal medium may send, propagate, or transport the program that is used by or in combination with the instruction execution system, apparatus, or device. The program codes contained on the computer-readable medium may be transmitted via any appropriate medium, including but not limited to: a wire, an optical cable, radio frequency (RF), etc., or any suitable combination thereof.

The computer-readable medium may be included in the electronic device, or may exist independently without being installed in the electronic device.

The computer-readable medium carries one or more programs. When the one or more programs are executed by the electronic device, the electronic device performs the corresponding methods.

According to one aspect of the present invention, a computer program product or a computer program is provided. The computer program product or the computer program includes computer instructions stored in a computer-readable storage medium. One or more processors of the computer device read the computer instructions from the computer-readable storage medium and execute the computer instructions, so that the computer device performs the methods provided in the various optional implementations.

Computer program codes for performing operations of the present invention may be written in one or more programming languages, or a combination thereof, including object-oriented programming languages such as Java, Smalltalk, C++, and conventional procedural programming languages such as "C" or similar programming languages. The program codes may be executed entirely on a user computer, partly on the user computer, as a stand-alone software package, partly on the user computer and partly on a remote computer, or entirely on the remote computer or server. In a case involving a remote computer, the remote computer may be connected to the user computer through any type of network, including a local area network (LAN) or a wide area network (WAN), or may be connected to an external computer, for example, through the Internet by an Internet service provider.

The flowcharts and block diagrams in the accompanying drawings illustrate possible implementation architectures, functions, and operations of the systems, the methods, and the computer program products according to various examples of the present invention. In this regard, each block in the flowchart or block diagram may represent a module, a program segment, or a portion of code, which contains one or more executable instructions for implementing the specified logical functions. It is also to be noted that, in some alternative implementations, the functions pointed by the blocks may occur out of the order pointed by the accompanying drawings. For example, two blocks shown in succession may actually be executed substantially in parallel, or may sometimes be executed in a reverse order, depending on the involved functions. It is also to be noted that each block in the block diagram and/or flowchart, and combinations of blocks in the block diagram and/or flowchart, may be implemented by a dedicated hardware-based system that performs a specified function or operation, or may be implemented by a combination of dedicated hardware and computer instructions.

The modules involved in the described examples of the present invention may be implemented by software or by hardware. The name of a module does not, in some cases, constitute a limitation on the module itself. For example, module A may also be described as "module A for performing operation B".

The above description is only an illustration of the preferred examples of the present invention and the technical principles used in the present invention. Those skilled in the art should understand that the scope of invention involved in the present invention is not limited to the technical solutions formed by specific combinations of the above technical features, but should also cover other technical solutions formed by any combination of the above technical features or their equivalent features without departing from the invention concepts, for example, the technical solutions formed by replacing the above features with, but not limited to, the technical features having similar functions disclosed in the present invention.

## Claims

1. A wireless frame transmission method, applied to a transmitter, the method comprising:
transmitting a wireless frame that comprises non-low-latency service data and low-latency service data;
wherein the low-latency service data is transmitted between two media access control service data units, MSDUs, of an aggregation of MSDUs, A-MSDU, of the non-low-latency service data;
wherein a lifetime parameter of the A-MSDU comprises: a first parameter or a second parameter;
wherein the first parameter comprises a preset lifetime parameter of the non-low-latency service data; and
wherein the second parameter comprises a sum of the preset lifetime parameter and a transmission duration of the low-latency service data.

2. The wireless frame transmission method according to claim 1, wherein transmitting the wireless frame comprises:
transmitting a first MSDU of the A-MSDU;
transmitting the low-latency service data, and
determining a remaining lifetime duration of the lifetime parameter.

3. The wireless frame transmission method according to claim 2, wherein after transmitting the low-latency service data, the method further comprises:
retransmitting the first MSDU.

4. The wireless frame transmission method according to claim 3, wherein the second parameter comprises: a sum of the preset lifetime parameter, the transmission duration of the low-latency service data, and a retransmission duration for retransmitting the first MSDU.

5. The wireless frame transmission method according to any one of claims 2 to 4, wherein transmitting the low-latency service data comprises:
suspending a counting of a transmit timer for the non-low-latency service data.

6. A wireless frame transmission method, applied to a receiver, the method comprising:
receiving a wireless frame transmitted by a transmitter that comprises non-low-latency service data and low-latency service data;
wherein the low-latency service data is transmitted between two media access control service data units, MSDUs, of an aggregation of MSDUs, A-MSDU, of the non-low-latency service data;
wherein a lifetime parameter of the A-MSDU comprises: a first parameter or a second parameter;
wherein the first parameter comprises a preset lifetime parameter of the non-low-latency service data; and
wherein the second parameter comprises a sum of the preset lifetime parameter and a transmission duration of the low-latency service data.

7. The wireless frame transmission method according to claim 6, wherein receiving the wireless frame transmitted by the transmitter comprises:
receiving a first MSDU of the A-MSDU transmitted by the transmitter;
receiving the low-latency service data transmitted by the transmitter, and
determining a remaining lifetime duration of the lifetime parameter.

8. The wireless frame transmission method according to claim 7, wherein after receiving the low-latency service data transmitted by the transmitter, the method further comprises:
receiving the first MSDU retransmitted by the transmitter.

9. The wireless frame transmission method according to claim 8, wherein the second parameter comprises: a sum of the preset lifetime parameter, the transmission duration of the low-latency service data, and a retransmission duration for retransmitting the first MSDU.

10. The wireless frame transmission method according to any one of claims 7 to 9, wherein receiving the low-latency service data transmitted by the transmitter comprises:
suspending a counting of a transmit timer for the non-low-latency service data.

11. An electronic device, being a transmitter, the electronic device comprising:
a transmitting module, configured to transmit a wireless frame that comprises non-low-latency service data and low-latency service data;
wherein the low-latency service data is transmitted between two media access control service data units, MSDUs, of an aggregation of MSDUs, A-MSDU, of the non-low-latency service data;
wherein a lifetime parameter of the A-MSDU comprises: a first parameter or a second parameter;
wherein the first parameter comprises a preset lifetime parameter of the non-low-latency service data; and
wherein the second parameter comprises a sum of the preset lifetime parameter and a transmission duration of the low-latency service data.

12. An electronic device, being a receiver, the electronic device comprising:
a receiving module, configured to receive a wireless frame transmitted by a transmitter that comprises non-low-latency service data and low-latency service data;
wherein the low-latency service data is transmitted between two media access control service data units, MSDUs, of an aggregation of MSDUs, A-MSDU, of the non-low-latency service data;
a lifetime parameter of the A-MSDU comprises: a first parameter or a second parameter;
the first parameter comprises a preset lifetime parameter of the non-low-latency service data; and
the second parameter comprises a sum of the preset lifetime parameter and a transmission duration of the low-latency service data.

13. An electronic device, comprising:
one or more memories,
one or more processors, and
a computer program stored in the one or more memories and executable on the one or more processors;
wherein the one or more processors, when executing the program, implement the method according to any one of claims 1 to 5 or implement the method according to any one of claims 6 to 10.

14. A computer-readable storage medium storing a computer program, wherein the computer program, when executed by one or more processors, implements the method according to any one of claims 1 to 5 or implements the method according to any one of claims 6 to 10.
